Europäisches Patentamt

European Patent Office

Office européen des brevets

(19)

(11) Publication number: **0 226 256**
**A1**

## (12) EUROPEAN PATENT APPLICATION

(21) Application number: **86202253.0**

(22) Date of filing: **12.12.86**

(51) Int. Cl.⁴: **H05B 41/34** , **H02M 3/337**

(30) Priority: **18.12.85 NL 8503475**

(43) Date of publication of application:
**24.06.87 Bulletin 87/26**

(84) Designated Contracting States:
**DE FR GB NL**

(71) Applicant: **Océ-Nederland B.V.**
**St. Urbanusweg 43**
**NL-5914 CC Venlo(NL)**

(72) Inventor: **Van den Eijnden, Josephus**
**Antonius**
**Hyacintstraat 14**
**NL-5701 WJ Helmond(NL)**

(54) **Charging circuit for energy storage capacitors.**

(57) Charging circuit for energy storage capacitors of the kind used, for example, for the voltage supply of flashlamps in photo-copying machines.

The charging circuit comprises two series-connected d.c. converters (12, 14) and a current limiting device (16, 18).

The current limiting device (16, 18) consists of a measuring circuit (16) for determining the output current ($I_1$) of the first converter (12) and a regulating circuit (18) for regulating the output current ($I_1$) of the first converter (12) and thus indirectly regulating the output current ($I_2$) of the second converter (14).

**EP 0 226 256 A1**

## Charging circuit for energy storage capacitors

This invention relates to a charging circuit for energy storage capacitors of the kind used, for example, for the voltage supply of flashlamps in photocopying machines.

To charge the capacitor a d.c. source is required to deliver an adequate output voltage. The voltage obtained at the energy storage capacitor at the end of the charging cycle must be adjusted as accurately as possible in order to allow accurate exposure control. Charging must be complete in a relatively short time. The charging current must be prevented, however, from becoming excessive at the start of the charging cycle, and thus resulting in the components used becoming unserviceable.

The document US-A-4 325 008 discloses a charging circuit in which an a.c. voltage used as input voltage is stepped up by means of a transformer and then rectified by a rectifier bridge. A relatively complicated transformer is used with current limiting elements (shunts). The transformer further comprises an auxiliary winding which is short-circuited by a TRIAC by means of a signal from a control circuit as soon as the capacitor has reached the required voltage. This ensures rapid disconnection of the charging current when the required voltage has been reached.

If a d.c. voltage is available as ouput voltage, the charging current source is usually constructed in the form of a d.c. converter, e.g. a push-pull converter comprising a transformer whose primary windings have the input current flowing through them in phase opposition by means of a suitable circuit. In these conditions the converter is required to satisfy high current loading requirements and the circuit must have high switching accuracy in order to avoid any destruction of the converter by short-circuits due to inaccuracies in the closing and opening of the switches in the primary circuit. Document US-A-4 307 440 also discloses a controlled d.c. source with a two-stage construction in which the output voltage of the first stage is regulated and then stepped up by a series-connected d.c. converter. The output voltage of the first stage is taken from a capacitor charged by means of a pulsed charging current. Voltage regulation is obtained by varying the charging current duty cycle. Also, this known voltage source includes a plurality of protective devices to limit the switching current.

The invention as characterised in the claims provides a charging circuit which operates with a d.c. voltage as input voltage and which with simple means allows accurate regulation of the charging current over a wide range and which also has great operational reliability.

The charging circuit according to the invention comprises two series-connected d.c. converters. The first converter is controlled by a control circuit and delivers a regulated d.c. to the second converter which in turn delivers a charging current at increased voltage to the energy storage capacitor. The charging current at the output of the second converter is proportional to the output current of the first converter. Thus the charging current is also indirectly regulated by the regulation of the output current of the first converter. Since the direct current regulation at the output of the first converter is carried out in the high current/low voltage area, current changes can be performed with high accuracy so that the charging current can be accurately regulated. It is thus possible to optimize charging in respect of charging time and accurate adjustment of the required final voltage of the energy storage capacitor, without excessive currents occurring at the start of the charge. The breakdown voltage strength of the components used in the regulation system has to satisfy only small demands.

Preferably, the first d.c. converter is formed by a series circuit of a coil and a switch actuated by a control circuit and periodically interrupting the supply of d.c. voltage of the coil. When the switch is open, the circuit is closed by means of a diode on the output side, said diode being connected to a point between the switch and the coil. In this embodiment of the converter the output current is stabilized by the coil inductance for a short period while the actual stabilization is provided by the regulation system.

The second converter is preferably a push-pull converter. As a result of the current stabilization, even short-lived short-circuits during the reversal of the current polarity in the push-pull converter do not produce any appreaciable current rises. The switching accuracy of the push-pull converter need not therefore satisfy any high requirements. Also, current peaks due to stray capacitances in the push-pull converter, e.g. in the transformer windings, are greatly reduced. The invention thus provides a reliable and low-loss energy transfer by means of a push-pull converter of simple construction.

A measuring circuit for generating a feedback signal corresponding to the output current of the first converter is preferably constructed in the form of a transformer through which flows the current flowing through the primary winding of the push-pull converter. This allows simple measurement of the current at low voltage and without any galvanic connection.

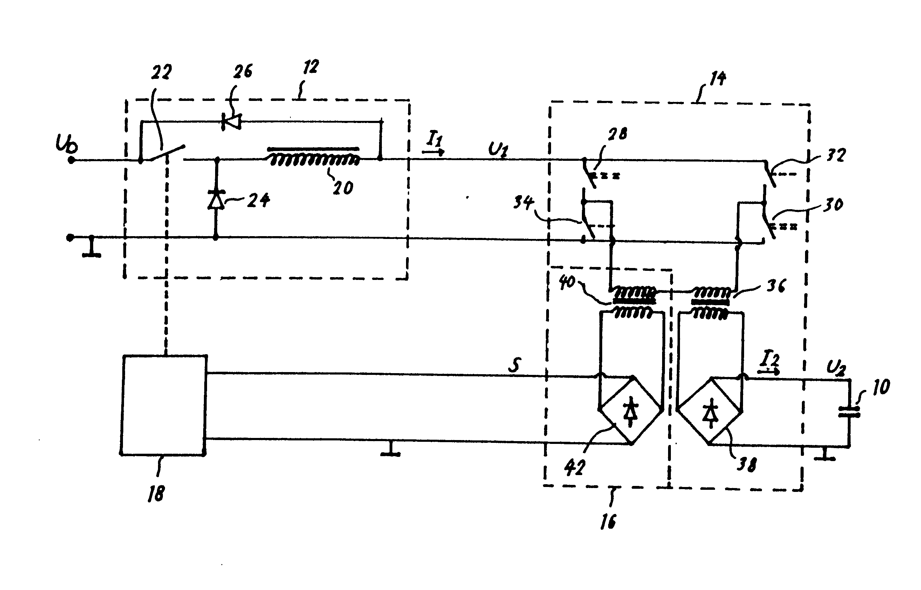

A preferred embodiment of the invention will be explained in detail hereinafter with reference to the drawing.

The sole Figure illustrates a circuit diagram of the charging circuit according to the invention.

The charging circuit for charging an energy storage capacitor 10 comprises a first d.c. converter 12, a second d.c. converter 14, a measuring circuit 16 and a regulating circuit 18. The first converter 12 comprises a coil 20, a switch 22 periodically opened and closed by the regulating circuit 18, and two diodes 24, 26. A d.c. voltage $U_o$ of, for example, 300 V, reaches coil 20 via switch 22. When the switch 22 is closed the output current $I_1$ of the converter 12 increases with a rise limited by the coil inductance. When the switch 22 is open, the circuit of coil 20 is closed by the diode 24 and the current $I_1$ decreases only slowly as a result of the coil inductance. The current $I_1$ can thus be kept at a required value by periodic opening and closing of the switch 22, the value being set by the duty cycle of switch 22 controlled by means of circuit 18. Diode 26 limits the voltage $U_1$ at the output of the first converter 12 to the value of the input voltage $U_o$.

The second converter 14 is in the form of a push-pull converter and comprises four switches 28, 30, 32, 34 connected in parallel in pairs, a transformer 36 whose primary winding forms a bridge circuit with the switches 28 -34, and a rectifier bridge 38 connected to the secondary winding of the transformer. The switches 28 and 30 are interconnected and are always opened and closed simultaneously. The switches 32 and 34 are correspondingly interconnected and are opened and closed in phase-opposition to the switches 28, 30. In this way, the polarity of the current $I_1$ flowing through the primary winding of transformer 36 is periodically reversed. The current induced in the secondary winding of the transformer 36 is rectified in the rectifier bridge 38 and reaches the capacitor 10 in the form of the charging current $I_2$. The output voltage $U_2$ of the converter 14 is a multiple of the input voltage $U_1$ and is limited to a maximum value of, for example, 4 kV by a control device (not shown).

Measuring circuit 16 comprises a transformer 40 whose primary winding is connected in series to the primary winding of the transformer 36 and a rectifier bridge 42 connected to the secondary winding of tranformer 40. Rectifier bridge 42 delivers a feedback signal S to the regulating circuit 18, said signal being proportional to the output current $I_1$ of the first converter 12. The current $I_1$ is regulated by circuit 18 via switch 22 in accordance with the feedback signal S.

Switches 22 and 28 -34 are in the form of electronic switches. A regulating circuit (not shown) for switches 28 -34 is connected to the regulating circuit 18 via a frequency divider circuit so that the switching time of converter 14 is synchronized with the switching time of switch 22. The switching frequencies are in the ratio of 2 : 1. If the switching frequency of switch 22 is, for example, f = 66 kHz, then the frequency of switches 28 -34 is f = 33 kHz. Synchronization of the switching time obviates any malfunction due to uneven overlapping of the switching times, and signal assessment during testing of the charging circuit is simplified.

When the capacitor 10 has reached the required voltage, switch 22 and all the switches of the converter 14 are simultaneously opened so that the charging current $I_2$ is instantaneously interrupted.

## Claims

1. A charging circuit for energy storage capacitors, more particularly for the voltage supply of flashlamps, comprising a high-voltage d.c. source - (12, 14) and a current limiting device (16, 18), .characterised in that the d.c. source is formed by a first d.c. converter (12) having a variable output current $(I_1)$ and connected in series therewith a second d.c. converter (14) for stepping up the voltage and in that the current limiting device comprises a measuring circuit (16) for determining the output current $(I_1)$ of the first converter and a regulating circuit (18) for regulating the output current of the first converter (12).

2. A charging circuit according to claim 1, characterised in that the first converter (12) comprises a coil (20), a switch (22) connected in series to the coil and actuated by the regulating circuit - (18), said switch periodically interrupting the supply of d.c. voltage $(U_o)$ to the coil, and a diode (24) connected to a point between the switch (22) and the coil (20) and forming a closed circuit with the coil and the second converter (14).

3. A charging circuit according to claim 1 or 2, characterised in that the second d.c. converter - (14) is a push-pull converter.

4. A charging circuit according to claim 3, characterised in that the switching frequency of the push-pull converter (14) is half the switching frequency of the switch (22) of the first converter (12) and in that the switching times are synchronized.

5. A charging circuit according to claim 3 or 4, characterised in that the measuring circuit comprises a transformer (40) through which flows the current flowing through the primary winding of the push-pull converter (14).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 176 425  (TRAILIGAZ) <br> * Page 3, line 11 - page 5, line 18 * | 1-4 | H 05 B  41/34 <br> H 02 M   3/337 |
| Y | | 5 | |
| | --- | | |
| X | EP-A-0 112 763  (THOMSON-CSF) <br> * Page 3, line 12 - page 8, line 8 * | 1 | |
| | --- | | |
| Y | FR-A-2 359 531  (DANFOSS) <br> * Figure 1 * | 5 | |
| | --- | | |
| A | FR-A-2 416 617  (CO. DE SIGNAUX ET D'ENTREPRISES) | | |
| | ----- | | **TECHNICAL FIELDS SEARCHED (Int. Cl.4)** <br><br> H 05 B  41/00 <br> H 02 M   3/00 <br> H 02 M   7/00 |

The present search report has been drawn up for all claims

| Place of search | Date of completion of the search | Examiner |
|---|---|---|
| THE HAGUE | 16-03-1987 | BERTIN M.H.J. |